# EUROPÄISCHE PATENTSCHRIFT

(11) **EP 3 762 589 B1**
(45) Veröffentlichungstag und Bekanntmachung des Hinweises auf die Patenterteilung: **04.06.2025**
(21) Anmeldenummer: 19702880.6
(22) Anmeldetag: 31.01.2019
(51) Int. Cl.: F01L 3/14, B21K 1/22

(54) **VERFAHREN ZUR HERSTELLUNG EINES HOHLVENTILS FÜR VERBRENNUNGSMOTOREN**
METHOD FOR PRODUCING A HOLLOW VALVE FOR INTERNAL COMBUSTION ENGINES
PROCÉDÉ DE FABRICATION D'UNE SOUPAPE CREUSE POUR MOTEUR À COMBUSTION INTERNE

(30) Priorität: 23.05.2018 DE 102018112291
(43) Veröffentlichungstag der Anmeldung: 13.01.2021
(73) Patentinhaber: Federal-Mogul Valvetrain GmbH, 30890 Barsinghausen (DE)
(72) Erfinder: MATTHIAS, Thorsten, 30826 Garbense (DE); WOLKING, Antonius, 30890 Barsinghausen (DE); BAYARD, Guido, 44369 Dortmund (DE)
(74) Vertreter: Kurig, Thomas
(86) Internationale Anmeldenummer: PCT/EP2019/052372
(87) Internationale Veröffentlichungsnummer: WO 2019/223908

(56) Entgegenhaltungen:
- EP-A1- 0 965 412
- EP-A1- 2 690 262
- EP-B1- 0 965 412
- WO-A1-2011/104903
- WO-A1-2018/149518
- DE-A1- 102015 220 891
- GB-A- 461 940
- JP-A- 2014 166 644

## Beschreibung

### Gebiet der Erfindung

Die vorliegende Erfindung betrifft ein Verfahren zur Herstellung von Hohlventilen, bzw. Hohlraumventilen, für Verbrennungsmotoren und damit hergestellte Hohlventile.

### Stand der Technik

Ein- und Auslassventile sind bei Verbrennungsmotoren thermisch und mechanisch hoch beanspruchte Bauteile. Eine ausreichende Kühlung ist daher notwendig, um eine dauerhafte Funktionsfähigkeit der Ventile sicherzustellen. Hierbei sind Hohltellerventile gegenüber Vollschaftventilen und Hohlschaftventilen (d.h. ein Hohlventil bei dem lediglich im Schaft ein Hohlraum vorgesehen ist) vorteilhaft, da ein Hohlraum sowohl im Schaft als auch im Ventilkopf vorhanden ist, wodurch eine verbesserte interne Kühlung - mittels eines Kühlmediums, z.B. Natrium - erzielt werden kann. Weitere Vorteile sind ein geringeres Gewicht, die Vermeidung von Hot-Spots und eine CO₂-Reduzierung.

Hergestellt werden Hohlventile üblicherweise durch eine Kombination verschiedener Verfahren, wie z.B. Schmieden, Drehen und Schweißen. Hierbei ist insbesondere das Drehen oder Fräsen des Hohlraumes kostenintensiv. Auch sollten Schweißpunkte an der Tellerfläche oder an anderen betriebsbedingt kritischen Stellen vermieden werden. Ein weiterer Nachteil bekannter Verfahren ist, dass oftmals eine große Anzahl von Prozessschritten notwendig ist. Beispielsweise betrifft die EP 0898055 A1 ein Hohltellerventil, das durch Schließen eines hohlen Rohlings mittels Schweißens hergestellt wird. Außerdem ist aus der DE 102015220891 A1 bekannt, ein innengekühltes Ventil durch Umformen einer becherförmigen Vorform mittels Walzen herzustellen. Weiterer relevanter Stand der Technik findet sich in EP 2 690 262 A1 und EP 0 151 976 A.

Aufgabe der vorliegenden Erfindung ist es also ein Herstellungsverfahren für Hohlventile bzw. für einen Ventilkörper für Hohlventile bereitzustellen, welches die genannten Nachteile nicht aufweist und gleichzeitig eine hohe Produktivität und gute Materialausnutzung aufweist.

### Zusammenfassung der Erfindung

Erfindungsgemäß wird das Problem gelöst durch ein Verfahren zur Herstellung eines Ventilkörpers eines Hohlventils gemäß den Merkmalen des angehängten Anspruchs 1.

Das Verfahren zur Herstellung eines Ventilkörpers eines Hohlventils umfasst die Schritte von Bereitstellen einer Vorform mit einem Ventilkopf und einer rohrförmigen Wand, die einen zylindrischen Hohlraum umgibt, und Drückwalzen der rohrförmigen Wand über einem Drückwalzdorn, der in den Hohlraum eingesetzt ist, um eine Länge der rohrförmigen Wand zu vergrößern.

Gemäß einem Aspekt der vorliegenden Erfindung kann das Bereitstellen der Vorform umfassen: Bereitstellen eines napfförmigen Halbzeugs, wobei das Halbzeug die rohrförmige Wand, die den zylindrischen Hohlraum des Halbzeugs umgibt, und einen Bodenabschnitt aufweist; und Formen des Ventilkopfes aus dem Bodenabschnitt.

Gemäß einem weiteren Aspekt kann das Bereitstellen des napfförmigen Halbzeugs umfassen: Bereitstellen eines zumindest teilweise zylindrischen Rohlings; und Formen des napfförmigen Halbzeugs aus dem Rohling.

Gemäß einem weiteren Aspekt kann das Formen des napfförmigen Halbzeugs durch Fließpressen oder Schmieden erfolgen.

Gemäß einem weiteren Aspekt kann das Formen des Ventilkopfes durch Fließpressen oder Schmieden erfolgen.

Erfindungsgemäß werden beim Drückwalzen mehrere Drückwalzen verwendet, wobei bevorzugt drei Drückwalzen verwendet werden.

Erfindungsgemäß sind die mehreren Drückwalzen während des Drückwalzens zueinander radial und axial versetzt.

Gemäß einem weiteren Aspekt kann das Verfahren weiterhin umfassen: ein weiteres Drückwalzen der rohrförmigen Wand ohne Drückwalzdorn.

Gemäß einem weiteren Aspekt kann das Verfahren weiterhin umfassen: Reduzieren eines Außendurchmessers der rohrförmigen Wand nach dem Drückwalzen.

Gemäß einem weiteren Aspekt kann das Reduzieren des Außendurchmessers der rohrförmigen Wand durch Rundkneten oder Einziehen erfolgen.

Gemäß einem weiteren Aspekt kann das Reduzieren des Außendurchmessers der rohrförmigen Wand ohne Dorn erfolgen.

Gemäß einem weiteren Aspekt kann das Reduzieren des Außendurchmessers der rohrförmigen Wand mit einem in den Hohlraum eingesetzten Dorn erfolgen.

Gemäß einem weiteren Aspekt kann das Verfahren weiterhin umfassen: Einfüllen eines Kühlmediums, insbesondere Natrium, in den Hohlraum; und Schließen des Hohlraums.

Das Problem wird weiterhin gelöst durch Hohlventil, welches einen Ventilkörper umfasst, der unter Verwendung des vorstehenden Verfahrens hergestellt wurde.

### Kurze Beschreibung der Zeichnung

Im Folgenden werden beispielhafte Ausführungsformen der Erfindung unter Bezug auf die Figuren genauer beschrieben, wobei
Figuren 1A - 1F verschiedene Zwischenschritte der erfindungsgemäßen Herstellung eines Ventilkörpers eines Hohlventils (dargestellt in Fig. 1D bzw. Fig. 1F) aus einem Rohling (dargestellt in Fig. 1A) zeigen; und
Fig. 2 eine Schnittansicht während des Drückwalzens zeigt.

Im Folgenden werden sowohl in der Beschreibung als auch in der Zeichnung gleiche Bezugszeichen für gleiche oder ähnliche Elemente oder Komponenten verwendet. Es ist zudem eine Bezugszeichenliste angegeben, die für alle Figuren gültig ist. Die in den Figuren dargestellten Ausführungen sind lediglich schematisch und stellen nicht notwendigerweise die tatsächlichen Größenverhältnisse dar.

### Ausführliche Beschreibung der Erfindung

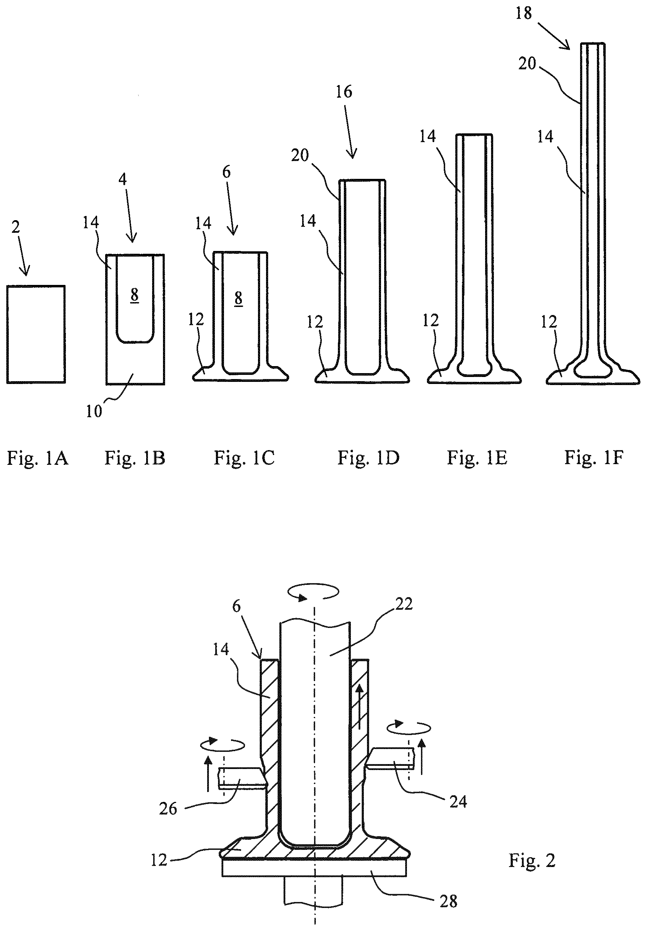

In den Figuren 1A bis 1F sind, in Schnittansichten, verschiedene Zwischenstufen des erfindungsgemäßen Herstellungsverfahrens dargestellt, wobei auch optionale bzw. bevorzugte Herstellungsschritte/Zwischenstufen dargestellt sind.

Bevorzugt dient als Ausgangspunkt, siehe Fig. 1A, ein Rohling 2 aus einem dem Fachmann bekannten Ventilstahl. Der Rohling weist eine zumindest teilweise zylindrische Form auf, bevorzugt eine kreiszylindrische Form, entsprechend der Kreisform des herzustellenden Ventilkörpers bzw. Ventils.

Der Rohling 2 wird in ein in Fig. 1B dargestelltes napfförmiges Halbzeug (bzw. Werkstück ) 4 umgeformt. Das Halbzeug 4 in Form eines Napfes umfasst einen Bodenabschnitt 10, aus dem später ein Ventilkopf (bzw. Ventilteller) 12 gebildet wird, und eine rohrförmige Wand (bzw. ringförmige Wand) 14, die einen zylindrischen, bevorzugt kreiszylindrischen, Hohlraum 8 des napfförmigen Halbzeugs 4 umgibt und aus der später ein Ventilschaft 20 gebildet wird. Hierbei kann während der nachfolgenden Umformschritte eventuell Material zwischen Bodenabschnitt 10 und rohrförmiger Wand 14 fließen. Allgemeiner wird erfindungsgemäß das napfförmige Halbzeug 4 direkt bereitgestellt; das Verfahren startet dann also mit Bereitstellen des in Fig. 1B dargestellten napfförmigen Halbzeugs 4.

In einem anschließenden Umformschritt wird aus dem Bodenabschnitt 10 der Ventilkopf 12 geformt. Eine dadurch erhaltene Vorform 6 des Ventilkörpers ist in Fig. 1C dargestellt.

Sowohl das Umformen des Rohlings 2 in ein napfförmiges Werkstück 4 als auch das Formen des Ventilkopfs 12 aus dem Bodenabschnitt 10 kann z.B. durch ein Warm- oder Kaltumformverfahren durchgeführt werden. Bevorzugt wird Fließpressen oder Schmieden verwendet. Beim Fließpressen wird ein Stempel in den Rohling 2 bzw. das Halbzeug 4 gepresst, um den Hohlraum 8 bzw. den Ventilkopf 12 zu formen, d.h. es handelt sich im Wesentlichen um (Napf-)Rückwärtspressfließen bzw. Querfließpressen. Die Vorform 6 kann auch in einem einzigen Umformschritt, z.B. Schmieden oder Fließpressen, direkt aus dem Rohling 2 geformt werden.

Im nächsten Bearbeitungsschritt, von Fig. 1C nach Fig. 1D, wird eine axiale Länge der rohrförmigen Wand 14 vergrößert. ,Axial' bezieht sich hier auf die durch die rohrförmige Wand 14 (d.h. den späteren Schaft) definierte Richtung, also auf die (Mittel-)Achse der rohrförmigen Wand; ,radial' ist entsprechend eine Richtung orthogonal zur axialen Richtung. Eine Länge der rohrförmigen Wand 6 wird also in axialer Richtung gemessen.

Hierzu wird erfindungsgemäß Drückwalzen bzw. Zylinderdrückwalzen über einem Drückwalzdorn 22 durchgeführt; vgl. Fig. 2. Beim Drückwalzen rotiert die Vorform und es wird mindestens eine, durch Reibschluss mitrotierende, Drückwalze 24, 26 gegen die Außenseite der rohrförmigen Wand gedrückt und in axialer Richtung bewegt, so dass es zu einer plastischen Formänderung kommt. Die damit einhergehende inkrementelle Umformung führt zu einer vorteilhaften Kaltverfestigung des bearbeiteten Stahls. Insgesamt verringert sich die Wanddicke der rohrförmigen Wand während sich gleichzeitig die axiale Länge der rohrförmigen Wand vergrößert. Die mindestens eine Drückwalze wird gegebenenfalls mehrmals in axialer Richtung verfahren bis die gewünschte Längenzunahme bzw. Wanddickenverringerung erreicht ist. Dabei wird der radiale Abstand der mindestens einen Drückwalze von der Achse der rohrförmigen Wand bei aufeinanderfolgenden Durchgängen sukzessive verringert.

Das Drückwalzen führt also, aufgrund des eingesetzten Drückwalzdorns, im Wesentlichen zu einer Längung der rohrförmigen Wand 14, wobei deren Außendurchmesser ein wenig abnimmt (entsprechend der Abnahme der Wanddicke). Falls eine größere Abnahme des Außendurchmessers erwünscht ist, kann auch ein Drückwalzen, mit mehreren Drückwalzen, ohne Drückwalzdorn erfolgen.

Falls Abmessungen der Vorform 6 und Parameter des Drückwalzens so gewählt sind, dass die durch das Drückwalzen erreichte Länge der rohrförmigen Wand 14, der durch das Drückwalzen erreichte Außendurchmesser und ein Innendurchmesser der rohrförmigen Wand 14 der Vorform (der einem Durchmesser des Drückwalzdorns entspricht) den gewünschten Abmessungen des herzustellenden Hohlventils entsprechen, kann auf diese Weise ein Ventilkörper 16 für ein Hohlschaftventil erhalten werden (vgl. Fig. 1D, wobei angemerkt sei, dass die in den Figuren gezeigten relativen Abmessungen nicht den tatsächlichen relativen Abmessungen entsprechen müssen, insbesondere ist in Fig. 1D der Durchmesser des Ventiltellers/-kopfes im Verhältnis zum Schaftdurchmesser kleiner als bei einem üblichen tatsächlichen Ventil dargestellt, ebenso ist der Schaftdurchmesser im Verhältnis zur Länge des Schaftes 20 größer als üblich dargestellt).

Abschließend (von Fig. 1D über Fig. 1E nach Fig. 1F) wird, optional, der Außendurchmesser der rohrförmigen Wand 14 reduziert, um einen fertiggestellten Ventilkörper 18 für ein Hohltellerventil zu erhalten, dessen Ventilschaft 20 einen vorbestimmten Außendurchmesser aufweist, d.h. einen gewünschten Zieldurchmesser aufweist; vgl. Fig. 1F. Dieser Umformschritt erfolgt bevorzugt ohne eingesetzten Dorn, damit der Durchmesser effektiv verkleinert werden kann. Dieser Schritt führt, neben einer Verringerung des Außendurchmessers, auch zu einer weiteren Längung der rohrförmigen Wand 14 und, falls ohne Dorn durchgeführt, zu einer Zunahme der Wanddicke der rohrförmigen Wand 14. Die Wanddicke wäre also gegebenenfalls im vorhergehenden Drückwalzschritt etwas kleiner einzustellen, um unter Berücksichtigung der Dickenzunahme im abschließenden Schritt eine bestimmte Wanddicke, und damit bei gegebenen Außeridurchmesser D einen bestimmten Innendurchmesser, zu erhalten.

Das Reduzieren des Außendurchmessers der rohrförmigen Wand 14 kann durch Rundkneten oder Einziehen ("Necking", Durchmesserverminderung durch Einschnüren) erfolgen, wobei Rundkneten bevorzugt wird. Beim Rundkneten ist wichtig, dass nach dem Rundkneten zur Reduzierung des Außendurchmessers der rohrförmigen Wand 14 kein weiterer Umformschritt des Ventilkörpers 18 für ein Hohltellerventil stattfindet, da dies die durch das Rundkneten erhaltenen positiven Materialeigenschaften verschlechtern würde. Rundkneten ist also in diesem Fall der abschließende Umformschritt.

Beim Rundkneten handelt es sich um ein inkrementelles Druckumformverfahren, bei dem in schneller Abfolge von verschiedenen Seiten in radialer Richtung auf das zu bearbeitende Werkstück eingehämmert wird. Durch den dadurch entstehenden Druck ,fließt' das Material sozusagen und die Materialstruktur wird nicht durch Zugspannungen verzerrt. Bevorzugt wird Rundkneten als Kaltumformverfahren, d.h. unterhalb der Rekristallisationstemperatur des bearbeiteten Materials, ausgeführt. Wesentlicher Vorteil der Verwendung von Rundkneten als abschließenden Umformschritt ist also, dass beim Rundkneten durch die radiale Krafteinleitung Druckspannungen induziert werden, wodurch das Auftreten von Zugspannungen, welche die Anfälligkeit für Risse erhöhen verhindert wird, insbesondere trifft dies für die Randschichten des Hohlschaftes zu. Das Rundkneten wirkt somit mit dem vorhergehenden, ebenfalls inkrementellen Umformverfahren des Drückwalzens auf vorteilhafte Weise zusammen, so dass optimale Materialeigenschaften, z.B. Festigkeit, erreicht werden.

Weitere Vorteile des Rundknetens als abschließenden Umformschritt - gegenüber Ziehverfahren oder "Necking" (Einziehen) - sind durch eine bessere erreichbare Oberflächenqualität und durch eine relativ höhere Durchmesserreduzierung des Schaftes je Schritt gegeben. Aufgrund der hohen erreichbaren Oberflächenqualität und dadurch, dass die einhaltbaren Toleranzen beim Rundkneten sehr klein sind, ist eine Nachbearbeitung des Ventilschaftes meist nicht notwendig. Mit Freiformverfahren bzw. Stauchverfahren - wie z.B. Necking - lässt sich im Allgemeinen nur eine schlechtere Oberflächenqualität bzw. Toleranzeinhaltung erreichen. Dementsprechend sollte nach dem Rundkneten zur Reduzierung des Außendurchmessers der rohrförmigen Wand insbesondere kein weiterer Verfahrensschritt mittels eines Ziehverfahrens oder Neckings erfolgen.

Um den Herstellungsprozess des Hohlventils abzuschließen kann weiterhin ein Kühlmedium, z.B. Natrium, über das nach außen offene Ende des Ventilschaftes in den Hohlraum des Ventilkörpers eingefüllt werden und anschließend dieses Ende des Ventilschaftes verschlossen werden, z.B. durch ein Ventilschaftendstück, welches, etwa mittels Reibschweißen oder einem anderen Schweißverfahren, angebracht wird (in den Figuren nicht dargestellt).

Das Reduzieren des Außendurchmessers kann in mehreren Teilschritten erfolgen (ein Zwischenschritt ist beispielsweise in Fig. 1E dargestellt), wobei die einzelnen Teilschritte jeweils wahlweise mit oder ohne Dorn erfolgen können (zu Beginn eines Teilschritts kann der Durchmesser eines Dorns kleiner als der Durchmesser des Hohlraums sein); auch kann ein Durchmesser der Dorne aufeinanderfolgender Teilschritte verringert werden.

Fig. 2 stellt den Verfahrensschritt des Drückwalzens, das zwischen Fig. 1C und Fig. 1D stattfindet, in einer Schnittdarstellung dar. Hierbei wird in den Hohlraum der Vorform 6 ein Drückwalzdorn 22 eingesetzt. Der Drückwalzdorn rotiert zusammen mit der Vorform 6 und einem Reitstock 28, der die Vorform am Ventilboden abstützt. Gegen die rohrförmige Wand 14 werden zwei einander gegenüberliegende Drückwalzen 24, 26 gedrückt, die mittels Reibschluss ebenfalls rotieren. Die Drückwalzen 24, 26 werden relativ zur Vorform in axialer Richtung bewegt, dadurch kommt es zu einer plastischen Verformung der rohrförmigen Wand 14, wobei der äußere Radius der rohrförmigen Wand 14 abnimmt und gleichzeitig die Länge der rohrförmigen Wand 14 zunimmt (in axialer Richtung). Hierbei "fließt" das Material der rohrförmigen Wand 14 in Bewegungsrichtung der Drückwalzen 24, 26 (Gleichlaufdrückwalzen). Die Rotationsrichtungen der Vorform (zusammen mit Drückwalzdorn und Reitstock) und der Drückwalzen, die Bewegungsrichtung der Drückwalzen 24, 26 und die Fließrichtung des Materials der rohrförmigen Wand 14 sind in der Figur durch Pfeile angedeutet.

In Fig. 2 sind beispielhaft zwei Drückwalzen 24, 26 (teilweise) eingezeichnet, ebenso ist die Verwendung von mehr als zwei Drückwalzen möglich, wobei die Verwendung von zwei oder drei Drückwalzen bevorzugt ist. Die mehreren Drückwalzen sind bevorzugt regelmäßig über den Umfang verteilt; d.h. bei zwei Drückwalzen beträgt der Winkel (in Umfangrichtung) zwischen den Drückwalzen in etwa 180°, bei drei Drückwalzen in etwa 120°, usw. Dadurch wird die Vorform insbesondere auch in allen Richtungen abgestützt.

Zwischen den Drückwalzen besteht ein radialer und ein axialer Versatz, wie in Fig. 2 dargestellt. Radialer Versatz soll heißen, dass der radiale Abstand der Drückwalzen 24, 26 von der Mittelachse unterschiedlich ist. Der axiale Versatz wird erreicht indem die Drückwalzen 24, 26 zeitversetzt verfahren werden, wobei (klarerweise) die Reihenfolge so ist, dass zunächst die Drückwalze mit dem größtem radialen Abstand von der Mittelachse verfahren wird, gefolgt derjenigen mit dem zweitgrößtem radialen Abstand, usw. Auf diese Weise kann das Verfahren beschleunigt werden, da mehrere Radius- bzw. Wanddickenreduzierungsschritte in einem Durchgang erfolgen können. Statt einem radialen Versatz von Drückwalzen gleichen Durchmessers können auch Drückwalzen mit unterschiedlichen Durchmessern Verwendung finden.

### Bezugszeichenliste

- 2: Rohling
- 4: napfförmiges Halbzeug
- 6: Vorform
- 8: Hohlraum
- 10: Bodenabschnitt
- 12: Ventilkopf/Ventilteller
- 14: rohrförmige Wand
- 16: fertiggestellter Ventilkörper für Hohlschaftventil
- 18: fertiggestellter Ventilkörper für Hohltellerventil
- 20: Ventilschaft
- 22: Drückwalzdorn
- 24: Drückwalze
- 26: Drückwalze
- 28: Reitstock

## Patentansprüche

1. Verfahren zur Herstellung eines Ventilkörpers (16, 18) eines Hohlventils, umfassend die folgenden Schritte:
Bereitstellen einer Vorform mit einem Ventilkopf (12) und einer rohrförmigen Wand (14), die einen zylindrischen Hohlraum (8) umgibt;
Drückwalzen der rohrförmigen Wand (14) über einem Drückwalzdorn (22), der in den Hohlraum (8) eingesetzt ist, um eine Länge der rohrförmigen Wand (14) zu vergrößern, wobei beim Drückwalzen mehrere Drückwalzen (24, 26) verwendet werden,
wobei die mehreren Drückwalzen (24, 26) während des Drückwalzens zueinander radial und axial versetzt sind,
**dadurch gekennzeichnet, dass**
der Drückwalzdorn zusammen mit der Vorform (6) und einem Reitstock (28) rotiert, der die Vorform am Ventilboden abstützt.

2. Verfahren gemäß Anspruch 1, wobei das Bereitstellen der Vorform umfasst:
Bereitstellen eines napfförmigen Halbzeugs (4), wobei das Halbzeug die rohrförmige Wand (14), die den zylindrischen Hohlraum (8) des Halbzeugs umgibt, und einen Bodenabschnitt (10) aufweist; und
Formen des Ventilkopfes (12) aus dem Bodenabschnitt (10).

3. Verfahren gemäß Anspruch 2, wobei das Bereitstellen des napfförmigen Halbzeugs (4) umfasst:
Bereitstellen eines zumindest teilweise zylindrischen Rohlings (2); und
Formen des napfförmigen Halbzeugs (4) aus dem Rohling (2).

4. Verfahren gemäß Anspruch 3, wobei das Formen des napfförmigen Halbzeugs (4) durch Fließpressen oder Schmieden erfolgt.

5. Verfahren gemäß Anspruch 2, wobei das Formen des Ventilkopfes (12) durch Fließpressen oder Schmieden erfolgt.

6. Verfahren gemäß einem der vorstehenden Ansprüche, wobei drei Drückwalzen verwendet werden.

7. Verfahren gemäß einem der vorstehenden Ansprüche, weiterhin umfassend:
ein weiteres Drückwalzen der rohrförmigen Wand (14) ohne Drückwalzdorn.

8. Verfahren gemäß einem der vorstehenden Ansprüche, weiterhin umfassend:
Reduzieren eines Außendurchmessers der rohrförmigen Wand (14) nach dem Drückwalzen.

9. Verfahren gemäß Anspruch 8, wobei das Reduzieren des Außendurchmessers der rohrförmigen Wand (14) durch Rundkneten oder Einziehen erfolgt.

10. Verfahren gemäß einem der Ansprüche 8 oder 9, wobei das Reduzieren des Außendurchmessers der rohrförmigen Wand (14) ohne Dorn erfolgt.

11. Verfahren gemäß einem der Ansprüche 8 oder 9, wobei das Reduzieren des Außendurchmessers der rohrförmigen Wand (14) mit einem in den Hohlraum eingesetzten Dorn erfolgt.

12. Verfahren gemäß einem der vorstehenden Ansprüche, weiterhin umfassend:
Einfüllen eines Kühlmediums, insbesondere Natrium, in den Hohlraum; und
Schließen des Hohlraums.

## Claims

1. A method for producing a valve body (16, 18) of a hollow valve, comprising the following steps:
providing a preform comprising a valve head (12) and a tubular wall (14), which surrounds a cylindrical cavity (8);
flow forming the tubular wall (14) above a flow forming mandrel (22), which is inserted into the cavity (8), in order to increase a length of the tubular wall (14),
wherein several flow forming rollers (24, 26) are used during flow forming,
wherein the several flow forming rollers (24, 26) are radially and axially offset to one another during the flow forming,
**characterized in that**
the flow forming mandrel rotates together with the preform (6) and a tailstock (28), which supports the preform at the valve bottom.

2. The method according to claim 1, wherein the provision of the preform comprises:
providing a bowl-shaped semi-finished product (4), wherein the semi-finished product has the tubular wall (14), which surrounds the cylindrical cavity (8) of the semi-finished product, and a bottom section (10); and
molding the valve head (12) from the bottom section (10).

3. The method according to claim 2, wherein the provision of the bowl-shaped semi-finished product (4) comprises:
providing an at least partially cylindrical blank (2); and
molding the bowl-shaped semi-finished product (4) from the blank (2).

4. The method according to claim 3, wherein the molding of the bowl-shaped semi-finished product (4) takes place by means of extrusion or forging.

5. The method according to claim 2, wherein the molding of the valve head (12) takes place by means of extrusion or forging.

6. The method according to one of the preceding claims, wherein three flow forming rollers are used.

7. The method according to one of the preceding claims, further comprising:
a further flow forming of the tubular wall (14) without flow forming mandrel.

8. The method according to one of the preceding claims, further comprising:
reducing an outer diameter of the tubular wall (14) after the flow forming.

9. The method according to claim 8, wherein the reducing of the outer diameter of the tubular wall (14) takes place by means of rotary swaging or feeding.

10. The method according to one of claims 8 or 9, wherein the reducing of the outer diameter of the tubular wall (14) takes place without mandrel.

11. The method according to one of claims 8 or 9, wherein the reducing of the outer diameter of the tubular wall (14) takes place with a mandrel, which is inserted into the cavity.

12. The method according to one of the preceding claims, further comprising:
filling a cooling medium, in particular sodium, into the cavity; and
closing the cavity.

## Revendications

1. Procédé de fabrication d'un corps de soupape (16, 18) d'une soupape creuse, comprenant les étapes suivantes :
la fourniture d'une préforme comportant une tête de soupape (12) et une paroi tubulaire (14) entourant une cavité cylindrique (8) ;
le fluotournage de la paroi tubulaire (14) sur un mandrin de fluotournage (22), qui est inséré dans la cavité (8), pour augmenter une longueur de la paroi tubulaire (14), dans lequel une pluralité de rouleaux de pression (24, 26) sont utilisés pendant le fluotournage,
dans lequel la pluralité de rouleaux de pression (24, 26) sont décalés radialement et axialement l'un par rapport à l'autre,
**caractérisé en ce que**
le mandrin de fluotournage tourne conjointement à la préforme (6) et à une contre-poupée (28), qui supporte la préforme sur la base de la soupape.

2. Procédé selon la revendication 1, dans lequel la fourniture de la préforme comprend :
la fourniture d'un produit semi-fini en forme de coupe (4), dans lequel le produit semi-fini présente la paroi tubulaire (14), qui entoure la cavité cylindrique (8) du produit semi-fini, et une section inférieure (10); et
la formation de la tête de soupape (12) à partir de la section de base (10).

3. Procédé selon la revendication 2, dans lequel la fourniture du produit semi-fini en forme de coupe (4) comprend :
la fourniture d'une ébauche au moins partiellement cylindrique (2) ; et
la formation du produit semi-fini en forme de coupe (4) à partir de l'ébauche (2).

4. Procédé selon la revendication 3, dans lequel la formation du produit semi-fini en forme de coupe (4) est réalisée par extrusion ou forgeage.

5. Procédé selon la revendication 2, dans lequel la formation de la tête de soupape (12) est réalisée par extrusion ou forgeage.

6. Procédé selon une quelconque des revendications précédentes, dans lequel trois rouleaux de pression sont utilisés.

7. Procédé selon une quelconque des revendications précédentes, comprenant en outre : un fluotournage supplémentaire de la paroi tubulaire (14) sans mandrin de fluotournage.

8. Procédé selon une des revendications précédentes, comprenant en outre : la réduction d'un diamètre extérieur de la paroi tubulaire (14) après le fluotournage.

9. Procédé selon la revendication 8, dans lequel la réduction du diamètre extérieur de la paroi tubulaire (14) est réalisée par matriçage ou emboutissage.

10. Procédé selon une des revendications 8 ou 9, dans lequel la réduction du diamètre extérieur de la paroi tubulaire (14) s'effectue sans mandrin.

11. Procédé selon une des revendications 8 ou 9, dans lequel la réduction du diamètre extérieur de la paroi tubulaire (14) s'effectue avec un mandrin inséré dans la cavité.

12. Procédé selon une des revendications précédentes, comprenant en outre :
le remplissage d'un fluide de refroidissement, notamment du sodium, dans la cavité ; et
la fermeture de la cavité.
